# EUROPEAN PATENT APPLICATION

(11) **EP 4 606 551 A1**
(43) Date of publication of application: **27.08.2025**
(21) Application number: 23879395.4
(22) Date of filing: 22.06.2023
(51) Int. Cl.: B29C 45/76, G06Q 50/04, B29C 48/92, G06Q 10/20

(54) **INFORMATION PROCESSING METHOD, INFORMATION PROCESSING DEVICE, AND COMPUTER PROGRAM**

(30) Priority: 17.10.2022 JP 2022166438
(71) Applicant: The Japan Steel Works, Ltd., Tokyo 141-0032 (JP)
(72) Inventor: FUROKAWA, Mikio, Tokyo 141-0032 (JP); SUZUKI, Jun, Tokyo 141-0032 (JP); OKIMOTO, Tasuku, Tokyo 141-0032 (JP)
(74) Representative: Simmons & Simmons LLP (Munich)
(86) International application number: PCT/JP2023/023131
(87) International publication number: WO 2024/084741

(57) **Abstract**

This information processing method includes: acquiring physical amount data relating to a state of a member constituting a molding machine; estimating remaining life or abnormality of the member on the basis of the acquired physical amount data; generating estimation data showing replacement fees for the member required to be replaced on the basis of an estimation result of the remaining life or abnormality of the member; and supplying the generated estimation data to a user of the molding machine.

## Description

### Technical Field

The present invention relates to an information processing method, an information processing apparatus and a computer program.

### Background Art

Patent Literature 1 discloses a life prediction device that predicts a remaining life of a rotating component in an injection molding machine or the like. The life prediction device of Patent Literature 1 accumulates the number of rotations of the rotating component rotated by a drive motor, and calculates the fatigue life of the rotating component from the accumulated numbers of rotations and the torque required to rotate the rotating component.

Patent Literature 2 discloses an abnormality detection device, which is provided with a vibration sensor for detecting the vibration of a ball screw installed in an injection molding machine, that detects an abnormality of the ball screw by analyzing the vibration intensity detected by the vibration sensor.

### Citation List

### Patent Literature

Patent Literature 1: Japanese Patent Application Laid-Open Publication No. H6-91683
Patent Literature 2: Japanese Patent Application Laid-Open Publication No. 2021-74917

### Summary of Invention

### Technical Problems

For some components constituting a molding machine such as an injection molding machine, an extruder or the like, it takes considerable time to secure the replacements. Even if the remaining life of such components can be predicted, the work required for replacement of the components needs to be taken into account to prepare new components before the components are damaged, otherwise the molding machine would be inoperable.

An object of the present disclosure is to provide an information processing method, an information processing apparatus and a computer program that are capable of inferring a remaining life or an abnormality degree of a component constituting a molding machine and of generating and presenting written estimate data indicating a replacement cost for the component in advance before the molding machine becomes inoperable due to breakage of the component.

### Solution to Problems

An information processing method according to one aspect of the present disclosure acquires physical quantity data related to a condition of a component constituting a molding machine; infers a remaining life or an abnormality degree of the component based on the acquired physical quantity data; generates estimate data indicating a replacement cost for the component that needs to be replaced based on an inference result concerning a remaining life or an abnormality degree of the component; and offers the generated estimate data to a user of the molding machine.

An information processing method according to one aspect of the present disclosure acquires physical quantity data related to a condition of a component constituting a molding machine; infers a remaining life or an abnormality degree of the component based on the acquired physical quantity data; reads specification information of the component that needs to be replaced based on an inference result concerning a remaining life or an abnormality degree of the component from a database storing a plurality of users and specification information of components constituting a plurality of the molding machines being different that are used by the plurality of users, in association with each other; and executes processing related to securing a spare part for the component that needs to be replaced based on the read specification information.

An information processing method according to one aspect of the present disclosure acquires physical quantity data related to a condition of a component constituting a molding machine; infers a remaining life or an abnormality degree of the component based on the acquired physical quantity data; selects relevant information according to a condition of the component from a storage unit storing a plurality of relevant information in correspondence with conditions of the component based on the acquired physical quantity data and inference result concerning a remaining life or an abnormality degree of the component; and offers the selected relevant information to the user of the molding machine.

An information processing apparatus according to one aspect of the present disclosure comprises: an acquisition unit that acquires physical quantity data related to a condition of a component constituting a molding machine; and a processing unit, the processing unit inferring a remaining life or an abnormality degree of the component based on the acquired physical quantity data, generating estimate data indicating a replacement cost for the component that needs to be replaced based on an inference result concerning a remaining life or an abnormality degree of the component, and offering the generated estimate data to a user of the molding machine.

An information processing apparatus according to one aspect of the present disclosure comprises: an acquisition unit that acquires physical quantity data related to a condition of a component constituting a molding machine; and a processing unit, the processing unit inferring a remaining life or an abnormality degree of the component based on the acquired physical quantity data, reading specification information of the component that needs to be replaced based on an inference result concerning a remaining life or an abnormality degree of the component from a database storing a plurality of users and specification information of components constituting a plurality of the molding machines being different that are used by the plurality of users, in association with each other; and executing processing related to securing a spare part for the component that needs to be replaced based on the read specification information.

An information processing apparatus according to one aspect of the present disclosure comprises: an acquisition unit that acquires physical quantity data related to a condition of a component constituting a molding machine; and a processing unit, the processing unit inferring a remaining life or an abnormality degree of the component based on the acquired physical quantity data; selecting relevant information according to a condition of the component from a storage unit storing a plurality of relevant information in correspondence with conditions of the component based on the acquired physical quantity data and inference result concerning a remaining life or an abnormality degree of the component; and offering the selected relevant information to the user of the molding machine.

A computer program according to one aspect of the present disclosure causing a computer to execute processing of acquiring physical quantity data related to a condition of a component constituting a molding machine; inferring a remaining life or an abnormality degree of the component based on the acquired physical quantity data; generating estimate data indicating a replacement cost for the component that needs to be replaced based on an inference result concerning a remaining life or an abnormality degree of the component; and offering the generated estimate data to a user of the molding machine.

A computer program according to one aspect of the present disclosure causing a computer to execute processing of acquiring physical quantity data related to a condition of a component constituting a molding machine; inferring a remaining life or an abnormality degree of the component based on the acquired physical quantity data; reading specification information of the component that needs to be replaced based on an inference result concerning a remaining life or an abnormality degree of the component from a database storing a plurality of users and specification information of components constituting a plurality of the molding machines being different that are used by the plurality of users, in association with each other; and executing processing related to securing a spare part for the component that needs to be replaced based on the read specification information.

A computer program according to one aspect of the present disclosure causing a computer to execute processing of: acquiring physical quantity data related to a condition of a component constituting a molding machine; inferring a remaining life or an abnormality degree of the component based on the acquired physical quantity data; selecting relevant information according to a condition of the component from a storage unit storing a plurality of relevant information in correspondence with conditions of the component based on the acquired physical quantity data and inference result concerning a remaining life or an abnormality degree of the component; and offering the selected relevant information to the user of the molding machine.

### Advantageous Effects of Invention

According to the present disclosure, it is possible to infer a remaining life or an abnormality degree of a component constituting a molding machine and to generate and present written estimate data indicating a replacement cost for the component in advance before the molding machine becomes inoperable due to breakage of the component.

### Brief Description of Drawings

FIG. 1 is a block diagram depicting an example of the configuration of a molding machine system according to a present embodiment.
FIG. 2 is a schematic view depicting an example of the configuration of a molding machine according to the present embodiment.
FIG. 3 is a block diagram depicting an example of the configuration of a data collection device according to the present embodiment.
FIG. 4 is a block diagram depicting an example of the configuration of an information processing apparatus according to the present embodiment.
FIG. 5 is a conceptual diagram depicting an example of a record layout of a collection data DB.
FIG. 6 is a conceptual diagram depicting an example of a record layout of a user DB.
FIG. 7 is a conceptual diagram depicting an example of a record layout of a user machine DB.
FIG. 8 is a block diagram depicting an inference processing unit for predicting a remaining life or an abnormality degree of a component.
FIG. 9 is a flowchart depicting a processing procedure of the information processing apparatus.
FIG. 10 is a flowchart depicting the processing procedure of the information processing apparatus.
FIG. 11 is one example of an inference result display unit.
FIG. 12 is a flowchart depicting a processing procedure for generating estimate data.
FIG. 13 is a flowchart depicting a processing procedure related to user clustering.
FIG. 14 is a flowchart depicting the processing procedure related to user clustering.
FIG. 15 is a conceptual diagram depicting user clustering processing.

### Description of Embodiments

An information processing method, an information processing apparatus and a computer program according to an embodiment of the present disclosure will be described below with reference to the drawings. It should be noted that the present disclosure is not limited to these examples, but is indicated by the scope of claims, and is intended to include all modifications within the meaning and scope equivalent to the scope of claims. Furthermore, at least parts of the following embodiments may arbitrarily be combined.

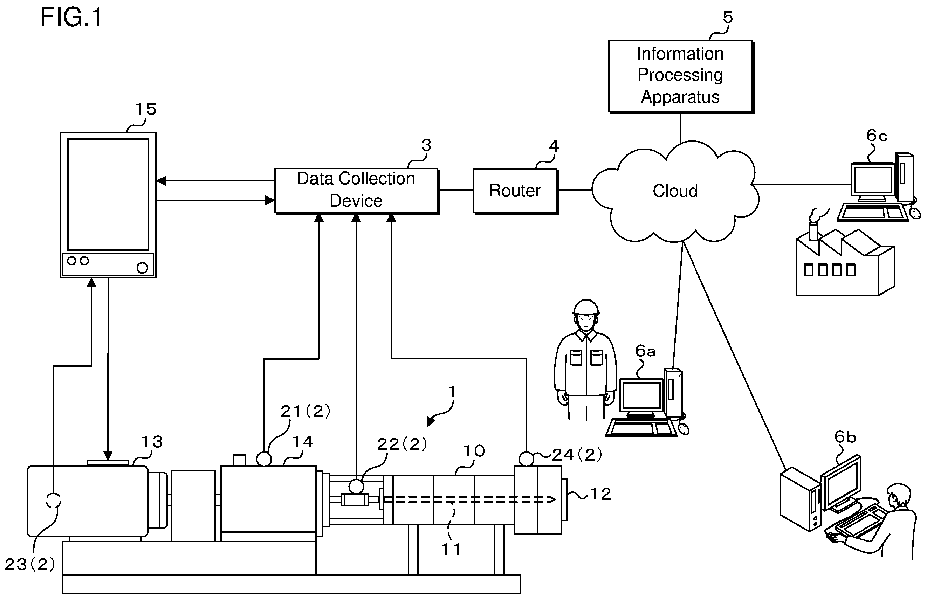

FIG. 1 is a block diagram depicting an example of the configuration of a molding machine system according to the present embodiment. The molding machine system includes a molding machine 1, multiple sensors 2, a data collection device 3, a router 4, an information processing apparatus 5 and terminal devices 6a, 6b, 6c. The molding machine 1 includes an injection molding machine and an extruder. The molding machine 1 is hereafter described as an extruder by way of example.

While one molding machine 1 and one data collection device 3 are depicted in FIG. 1, the information processing apparatus 5 is connected to multiple data collection devices 3 (not illustrated) through a network. The data collection device 3 is connected to one or more molding machines 1. The information processing apparatus 5 can collect information related to each of the multiple molding machines 1 and infer a remaining life or an abnormality degree of one or more components constituting each of the molding machines 1. The multiple molding machines 1 and the data collection device 3 are assumed to be installed in each of the factories of multiple users who possess the molding machines 1. The user is a staff member, an employee of an organization such as a cooperation or the like that possesses the molding machines 1. The staff member or the employee is hereafter simply referred to as the user.

The terminal devices 6a, 6b 6c are each a communication terminal with a display portion such as a computer, a tablet terminal or a smartphone. The terminal device 6a is a terminal to be used by the user. The terminal device 6b is a terminal to be used by a service representative such as a sales representative or a maintenance manager who is associated with the molding machine 1 of the user. The terminal device 6c is a terminal to be used by a person in charge of a factory where a component constituting the molding machine 1 is manufactured.

The person in charge of providing service will be hereafter simply referred to as a sales representative. Moreover, a company, which is on the side of the sales representative, that offers maintenance and management services for the components constituting the molding machine 1 to the user and that manufactures and sells the components will be referred to as a maintenance and management company.

### <Background>

The molding machine system according to the present embodiment is for optimizing the maintenance management of components constituting the molding machine 1. The components constituting the molding machine 1 include mass-produced general-purpose products and custom-made products varying depending on the user and the molding machine 1. Among the custom-made products, some products require time from placement of an order to manufacture while other products do not require so much time. The present embodiment is particularly effective for the maintenance management of components that are custom-made products and require time for manufacture. A reduction gear 14 of the molding machine is an example of such a custom-made product. The specifications of the reduction gear 14 vary depending on the user and the molding machine 1, and it may take several months to manufacture the reduction gear 14. The operational downtime of the molding machine 1 caused by breakage of the reduction gear 14 is a major risk.

For this reason, users usually perform maintenance management such as overhauls of the reduction gears 14 at regular intervals of several years, for example. Though overhauls at intervals of several years minimize the risk of operational downtime, this interval is not necessarily an optimal overhaul period depending on the operating situation and operation environment of the molding machine 1. The overhaul interval set longer may, however, cause substantial loss due to operational downtime of the molding machine 1 once breakage of the reduction gear 14 occurs.

Though it is conceivable for the maintenance management company to have prepared spare parts for the reduction gear 14 in stock, having prepared custom-made products varying for different users is at risk for the maintenance management company. If the time from the preparation of spare parts to the actual replacement of parts is long, the cost for storage and condition management of components piles up. In addition, if the molding machine 1 is no longer in use without parts being replaced, or if a product made of another company is adopted, the spare parts will be discarded.

The molding machine system according to the present embodiment infers a remaining life or an abnormality degree of a component of the molding machine 1 and presents it to the user and the sales representative to thereby facilitate prediction of the timing of replacement of the components. The molding machine system further presents a written estimate for a replacement cost and component-related information to the user, and enables the maintenance and management company to start securing spare parts (new parts) at an optimal timing prior to breakage of a component such as the reduction gear 14 or the like. Note that the information processing apparatus 5 automatically generates a written estimate. The information processing apparatus 5 further automatically selects component-related information according to the condition of the user and the molding machine 1.

In the case where the molding machine system according to the present embodiment is employed, the maintenance and management company starts manufacturing a custom-made product before a component of the molding machine 1 is damaged and thus bears a certain risk. Therefore, in the present embodiment, the following service form is assumed.

The maintenance and management company provides a service of inferring a remaining life or an abnormality degree of a component constituting the molding machine 1 and reporting the condition of the molding machine 1 and the component to the user. The maintenance and management company further predicts the replacement timing of a component constituting the molding machine 1, manufactures spare parts thereof in advance, while presenting a written estimate at an appropriate timing and immediately offering the spare parts for the component before or when the component is damaged. These services allow the user to replace components in the molding machine 1 at an optimal timing and avoid the risk of operational downtime of the molding machine 1.

For the aforementioned services, the user pays the maintenance management company a certain amount of warranty fees regularly, for example, monthly. When replacing components, the user pays the maintenance management company a replacement cost presented in the written estimate. The replacement cost varies depending on the operating situation and the operation environment of the molding machine 1, the frequency of failure of the component or the like. This is because the risks borne by the maintenance management company vary depending on these different factors.

### <Molding Machine 1>

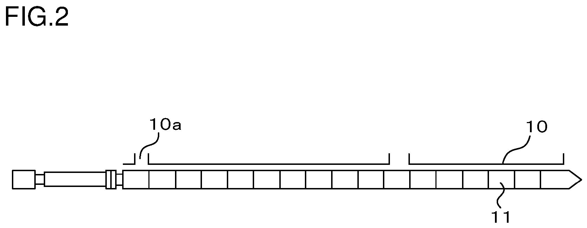

FIG. 2 is a schematic view depicting an example of the configuration of the molding machine 1 in the present embodiment. The molding machine 1 is provided with a cylinder 10 with a hopper 10a through which a resin raw material is input, two screws 11 and a die 12 (see FIG. 1) that is disposed at the outlet of the cylinder 10. The two screws 11 are arranged substantially parallel with each other in mesh and are rotatably inserted into a hole of the cylinder 10. The two screws 11 carry the resin raw material input into the hopper 10a in the direction of extrusion (to the right in FIG. 1 and FIG. 2), and melt and knead the resin raw material. The molten resin raw material is discharged from the die 12 with a through hole.

For the screw 11, multiple types of screw pieces are combined and integrated into one bar of screw 11. For example, the screw 11 is configured by arranging and combining a flight screw-shaped forward flight piece that carries a resin raw material in a forward direction, a reverse flight piece that carries a resin raw material in a reverse direction, a kneading piece that kneads a resin raw material and the like, in an order and at positions according to the characteristics of the resin raw material.

The molding machine 1 is further provided with a motor 13 that outputs driving force for rotating the screw 11, the reduction gear 14 that reduces the transmission speed of the driving force from the motor 13 and a control device 15. The screw 11 is coupled to an output shaft of the reduction gear 14. The screw 11 is rotated by the driving force of the motor 13 that is reduced in transmission speed by the reduction gear 14.

### <Sensor 2>

A sensor 2 detects physical quantities related to the condition of a component constituting the molding machine 1, and directly or indirectly outputs the detected and obtained physical quantity data to the data collection device 3. The physical quantity data is data of time-series sensor values indicating the detected physical quantities. The sensor 2 includes sensors provided on the molding machine 1 as requisites for controlling the operation of the molding machine 1 and sensors provided for inferring the life of components. A part of the multiple sensors 2 are connected to the data collection device 3, so that the data collection device 3 acquires physical quantity data from the sensors 2. Another part of the multiple sensors 2 are connected to the control device 15, so that the data collection device 3 acquires physical quantity data from the sensors 2 via the control device 15.

The physical quantities include temperature, position, velocity, acceleration, current, voltage, pressure, time, image data, torque, force, distortion, power consumption, weight and the like. These physical quantities can be measured with a thermometer, a position sensor, a speed sensor, an accelerometer, an ammeter, a voltmeter, a pressure gauge, a timer, a camera, a torque sensor, a wattmeter, a weightometer and the like.

The multiple sensors 2 include, for example, a first sensor 21 that detects a physical quantity related to the reduction gear 14, a second sensor 22 that detects a physical quantity related to the screws 11, a third sensor 23 that detects a physical quantity related to the motor 13 and a fourth sensor 24 that detects a physical quantity related to the die 12.

The first sensor 21 includes a vibration detector or the like that detects the vibration of the reduction gear 14, for example. The second sensor 22 includes a torque detector that detects a shaft torque of the screw 11, a tachometer that detects a rotational speed of the screw 11, a manometter that detects a screw tip pressure, a thermometer that detects a temperature of the screw 11 and a displacement sensor that detects a displacement of the rotation center of the screw 11. The third sensor 23 includes an ammeter that detects a current of the motor and a tachometer that detects a rotational speed of the motor. The fourth sensor 24 includes a manometer that detects a die head pressure acting on the die 12.

### <Control Device 15>

**The control** device 15 is a computer that controls the operation of the molding machine 1 and has a display unit and a transmission/reception unit (not illustrated) that transmits and receives information to and from the data collection device 3.

More specifically, the control device 15 transmits operating data indicating the operating state of the molding machine 1 to the data collection device 3. The operating data includes, for example, a motor current, a rotational speed of the screw 11, a tip pressure of the screw 11, a die head pressure, a feeder supply amount (supply amount of a resin raw material), an extrusion output, a cylinder temperature and a resin pressure.

The control device 15 receives various graph data that are transmitted from the data collection device 3 and inference result data indicating a remaining life or an abnormality degree of a component constituting the molding machine 1. The control device 15 displays the contents of the received graph data and inference result data. The control device 15 further outputs a warning depending on the remaining life or the degree of abnormality indicated by the received inference result data.

### <Data Collection Device 3 >

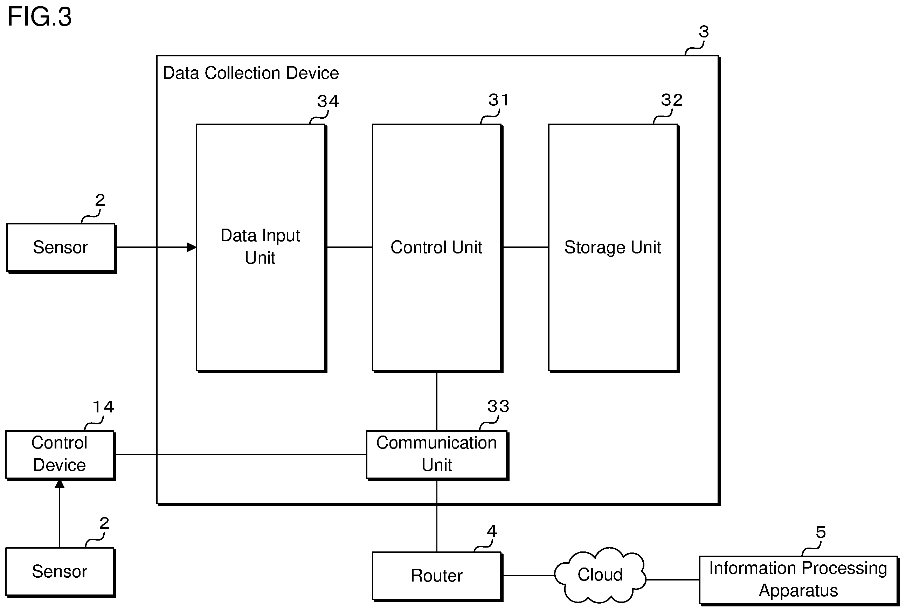

FIG. 3 is a block diagram depicting an example of the configuration of the data collection device 3 according to the present embodiment. The data collection device 3 is a computer and is provided with a control unit 31, a storage unit 32, a communication unit 33 and a data input unit 34. The storage unit 32, the communication unit 33 and the data input unit 34 are connected to the control unit 31. The data collection device 3 is a Programmable Logic Controller (PLC), for example.

The control unit 31 includes an arithmetic processing circuit such as a CPU (Central Processing Unit), a multi-core CPU, an Application Specific Integrated Circuit (ASIC) or a Field-Programmable Gate Array (FPGA), an internal storage device such as a ROM (Read Only Memory) or a RAM (Random Access Memory), an I/O terminal and the like. The control unit 31 executes a control program stored in the storage unit 32, which will be described later, to perform processing of collecting physical quantity data and transmitting it to the information processing apparatus 5. Note that each functional part of the data collection device 3 may be realized in software, or some or all of the functional parts may be realized in hardware.

The storage unit 32 is a nonvolatile memory such as a hard disk, an EEPROM (Electrically Erasable Programmable ROM) or a flash memory. The storage unit 32 stores a control program for causing the computer to execute processing of collecting physical quantity data.

The communication unit 33 is a communication circuit that transmits and receives information according to a predetermined communication protocol such as the Ethernet (registered trademark). The communication unit 33 is connected to the control device 15 over a first communication network such as LAN or the like, so that the control unit 31 can transmit and receive various information to and from the control device 15 via the communication unit 33. The control unit 31 acquires physical quantity data via the communication unit 33.

The first network is connected to a router 4, and the communication unit 33 is connected via the router 4 to the information processing apparatus 5 in the cloud, which is a second communication network. The control unit 31 can transmit and receive various information to and from the information processing apparatus 5 via the communication unit 33 and the router 4.

The data input unit 34 is an input interface to which signals output from the sensors 2 are input. The data input unit 34 is connected to the sensors 2, so that the control unit 31 acquires physical quantity data via the data input unit 34.

### <Information Processing Apparatus 5>

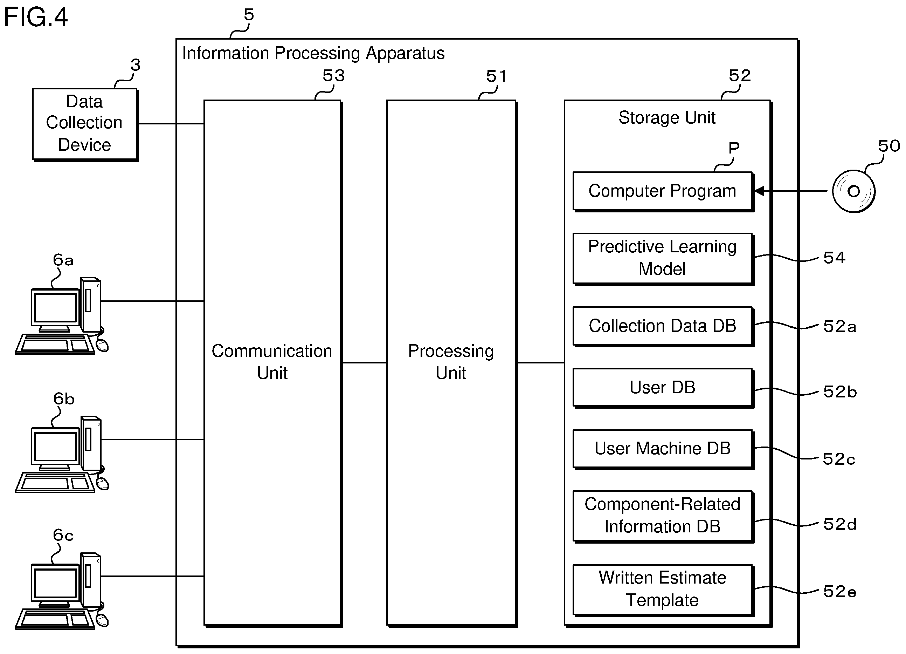

FIG. 4 is a block diagram depicting an example of the configuration of the information processing apparatus 5 according to the present embodiment. The information processing apparatus 5 is a computer, and is provided with a processing unit 51, a storage unit 52 and a communication unit 53. The storage unit 52 and the communication unit 53 are connected to the processing unit 51.

The processing unit 51, which is a processor, includes an arithmetic processing circuit such as a CPU, a multi-core CPU, a GPU (Graphics Processing Unit), a General-Purpose Computing on Graphics Processing Units (GPGPU), a Tensor Processing Unit (TPU), an ASIC, an FPGA or a Neural Processing Unit (NPU), an internal storage such as a ROM or a RAM, and an I/O terminal. The processing unit 51 functions as the information processing apparatus 5 according to the present embodiment by executing a computer program P (computer program product) stored in the storage unit 52, which will be described later.

The information processing apparatus 5 according to the present embodiment functions as a machine condition offering web server that offers information on the condition of the molding machines 1 to the user and the sales representative. The information processing apparatus 5 also functions as a component information offering web server that offers information on components constituting the molding machines 1 to the user and the sales representative. The component information offering web server executes processing of offering written estimate data on a cost for replacement of a component to the user and accepting an order for the component, for example. Hereafter, the information processing apparatus 5, which functions as a machine condition offering web server, is appropriately called a first server. The information processing apparatus 5, which offers component information offering web server, is appropriately called a second server. Note that each functional part of the information processing apparatus 5 may be realized in software, or some or all of the functional parts thereof may be realized in hardware. The information processing apparatus 5 may also be composed of multiple computers, each computer functioning as a first server and a second server.

The communication unit 53 is a communication circuit that transmits and receives information according to a predetermined communication protocol such as the Ethernet (registered trademark). The communication unit 53 is connected to the data collection device 3 and the terminal devices 6a, 6b, 6c over the second communication network, so that the processing unit 51 can transmit and receive various information to and from the data collection device 3 and the terminal devices 6a, 6b, 6c via the communication unit 53.

The storage unit 52 is a nonvolatile memory such as a hard disk, an EEPROM (Electrically Erasable Programmable ROM) or a flash memory. The storage unit 52 stores the computer program P to cause the computer to execute the processing of inferring the life of components constituting the molding machine 1, a predictive learning model 54, a collection data DB (database) 52a, a user DB (database) 52b, a user machine DB (database) 52c, a component-related information DB (database) 52d and a written estimate template 52e.

The computer program P or the like may be recorded on a recording medium 50 so as to be readable by the computer. The storage unit 52 stores the computer program P or the like read from the recording medium 50 by a reader (not illustrated). The recording medium 50 is a semiconductor memory such as a flash memory. Furthermore, the recording medium 50 may be an optical disc such as a CD (Compact Disc)-ROM, a DVD (Digital Versatile Disc)-ROM, or a BD (Blu-ray (registered trademark) Disc. Moreover, the recording medium 50 may be a magnetic disk such as a flexible disk or a hard disk, or a magneto-optical disk. In addition, the computer program P or the like may be downloaded from an external server (not illustrated) connected to a communication network (not illustrated) and may be stored in the storage unit 52.

The predictive learning model 54 is an image recognition learning model that outputs data indicating a remaining life or an abnormality degree of a component constituting the molding machine 1 if image data generated from physical quantity data is input. The predictive learning model 54 has a CNN (Convolutional Neural Network), for example. The processing unit 51 transfer-trains or fine-tunes the existing trained model to generate a learning model specific for inferring the remaining life or the degree of abnormality of a specific molding machine 1 and a component.

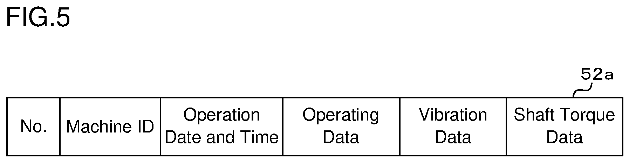

FIG. 5 is a conceptual diagram indicating an example of a record layout of the collection data DB 52a. The collection data DB 52a, which is provided with a hard disk and Database Management System (DBMS), stores various physical quantity data collected from the molding machine 1. For example, the collection data DB 52a has a "No." (record number) column, a "machine ID" column, an "operation date and time" column, an "operating data" column, a "vibration data" column and a "shaft torque data" column.

The "machine ID" column stores a machine identifier of the molding machine 1. The "operation date and time" column stores information indicating the year, month and date when various types of data stored as records were acquired. The "operating data" column stores time-series physical quantities indicating an operating state of the molding machine 1 such as motor current, a rotational speed of the screw 11, a tip end pressure of the screw 11, a die head pressure, a feeder supply amount (supply amount of resin row material), an extruder output, a cylinder temperature, a resin pressure and the like. The "vibration data" column stores vibration data as time-series physical quantity data. The "shaft torque data" column stores torque data of the screw 11 as time-series physical quantity data.

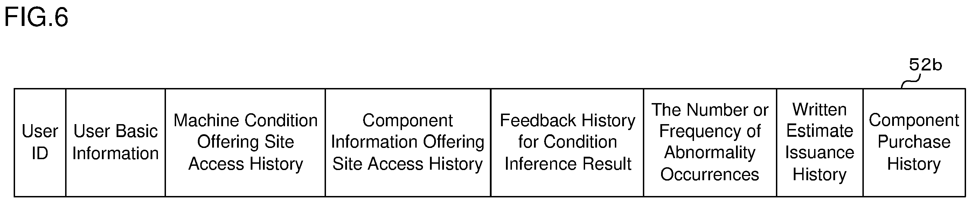

FIG. 6 is a conceptual diagram depicting an example of a record layout of the user DB 52b. The user DB 52b, which is provided with a hard disk and DBMS, stores basic information of the users and the like. For example, the user DB 52b contains a "user ID" column, a "user basic information" column, a "machine condition offering site access history" column, a "component information offering site access history" column, a "feedback history for condition inference result" column, an "the number or frequency of abnormality occurrences" column, a "written estimate issuance history" column, and a "component purchase history" column.

The "user ID" column stores an identifier of the user of the molding machine 1. The "user basic information" column stores basic information of the user, for example, company information such as the number of employees of a company as a user, a service plan and the like.

The "machine condition offering site access history" column stores history including the number of times the user accesses the machine condition offering site, the date and time when access was made, the accessed web page, and the time spent on the web page. The "component information offering site access history" column stores a history including the number of times the user accesses the component information offering site, the date and time when access was made, the accessed web page, and the time spent on the web page.

The "feedback history for condition inference result" column stores a history of user feedback information for the result of inference with the predictive learning model 54.

The "number or frequency of abnormality occurrences" column stores the number or frequency of abnormality occurrences for the molding machine 1 used by the user. The "written estimate issuance history" column stores written estimates that have been issued in the past, the date and time when the written estimates were issued and the like. The "component purchase history" column stores a purchase history of the component by the user. The purchase history, for example, stores the type of a purchased component, a purchase date, the number of purchased components and the like.

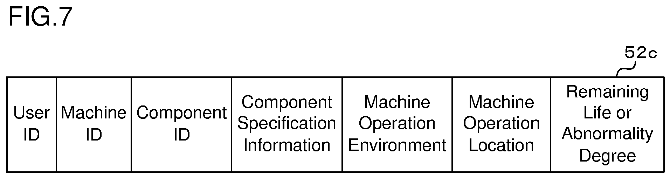

FIG. 7 is a conceptual diagram depicting an example of a record layout of the user machine DB 52c. The user machine DB 52c, which is provided with a hard disk and DBMS, stores information on components constituting the molding machine 1 used by the user. The user machine DB 52c contains, for example, a "user ID" column, a "machine ID" column, a "component ID" column, a "component specification information" column, a "machine operation environment" column, a "machine operation location" column and a "remaining life or abnormality degree" column.

The "user ID" column stores an identifier of the user of the molding machine 1. The "machine ID" column stores a machine identifier of the molding machine 1. The machine ID includes information that can be used to determine whether the machine is a product of a maintenance company or a product of another company. The "component ID" column stores a component identifier of a component constituting the molding machine 1 for which a remaining life or an abnormality degree is to be predicted.

The "component specification information" column stores specification information on a product specification of the component corresponding to the component ID. For example, the specification information of the screw 11 and the reduction gear 14 that constitute the extruder is stored. The components that constitute the molding machine 1 are not necessarily mass-produced products, but are custom-made products manufactured for each user. The specification information includes information for estimating a replacement cost for the component. The specification information includes information necessary for securing spare parts by manufacturing components, for example.

The "machine operation environment" column stores the surrounding environment where the molding machine 1 is installed and used. Information related to a failure risk of the molding machine 1, for example, "along the coast" is stored. The "machine operation location" column stores information indicating a geographical location where the molding machine 1 is installed and used. The geographical location is expressed, for example, in latitude and longitude. The geographical location may be the name of the country, the name of the prefecture, or the name of the city. The geographical location may be information indicating whether the factory where the molding machine 1 is installed is a domestic factory or an overseas factory.

The "remaining life or abnormality degree" column stores a remaining life or an abnormality degree of the component corresponding to the component ID. The remaining life or the abnormality degree is predicted by the predictive learning model 54.

The component-related information DB 52d stores arbitrary information related to a component constituting the molding machine 1, such as TIPS information, for example. The TIPS information includes a description, a maintenance/inspection method and the like of the component.

The written estimate template 52e stored in the storage unit 52 is a template for generating a written estimate of the replacement cost for a component constituting the molding machine 1. The written estimate template 52e needs items where a user name, a component name and a replacement cost for the component, for example, are written. The item of the replacement cost includes fields where a standard replacement cost, a surcharge and a discount amount, for example, are entered.

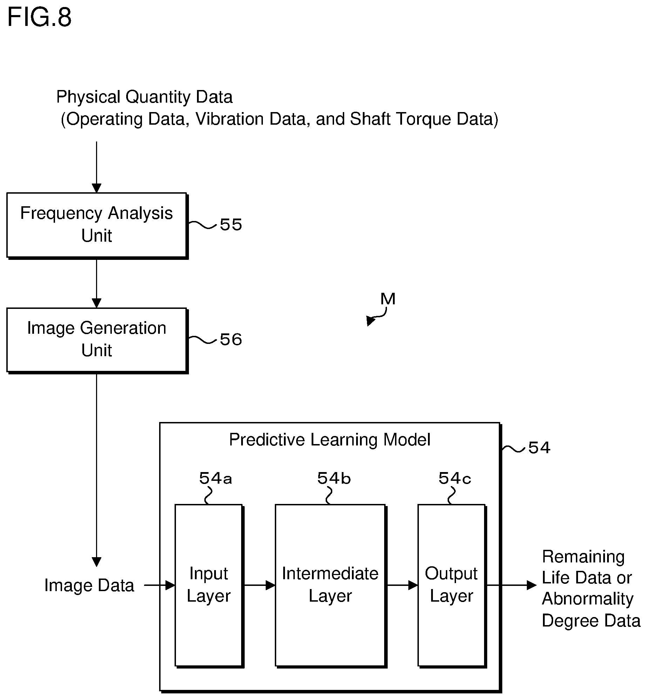

FIG. 8 is a block diagram depicting an inference processing unit M for predicting a remaining life or an abnormality degree of a component. The inference processing unit M includes the predictive learning model 54, a frequency analysis unit 55 and an image generation unit 56. Each functional part of the inference processing unit M may be realized in software by the processing at the processing unit 51, or some or all of the functional parts may be realized in hardware.

The frequency analysis unit 55 is an arithmetic processing unit that Fourier-transforms the time-series physical quantity data into physical quantity data of the frequency component. The frequency analysis unit 55 may Fourier-transform the physical quantity data by Short-Time Fourier Transform (STFT). The image generation unit 56 is an arithmetic processing unit that converts the Fourier-transformed physical quantity data into image data representing the physical quantity data with an image. For example, the physical quantity data may be represented on an image plane with the frequency component on the horizontal axis and the magnitude of the frequency component on the vertical axis of the image. An image obtained by Fourier-transforming physical quantity data is hereafter called a Fourier transform image.

The method of frequency analysis may employ, not limited to STFT, Wavelet Transformation, Stockwell Transform, Wigner distribution function, Empirical Mode Decomposition, Hilbert-Huang Transform or the like.

The predictive learning model 54, which is a convolutional neural network (CNN), includes an input layer 54a to which image data of the Fourier transform image is input, an intermediate layer 54b and an output layer 54c that outputs remaining life data indicating a remaining life of the component or abnormality degree data indicating an abnormality degree of the component.

The input layer 54a has multiple nodes to which pixel values of the respective pixels constituting the Fourier transform image are input. The intermediate layer 54b is configured by alternately connecting convolutional layers for convolving the pixel values of the pixels of the Fourier transform image input to the input layer 54a and pooling layers for mapping the pixel values convolved in the convolutional layer. The intermediate layer 54b extracts the features of the Fourier transform image while compressing the image information of the Fourier transform image, and outputs the extracted Fourier transform image, i.e., the features of the physical quantity data to the output layer 54c.

The output layer 54c has nodes that output remaining life data indicating a remaining life or abnormality degree data indicating an abnormality degree of the component at the time when the physical quantity data is measured.

Note that the predictive learning model 54 may employ CNN by way of example, but may also be constructed by Multilayer perceptron (MLP), Convolutional Neural Network (CNN), Graph Neural Network (GNN), Graph Convolutional Network (GCN), Recurrent Neural Network (RNN), Long Short Term Memory (LSTM) and other neural network models. The predictive learning model 54 may also be constructed by using an algorithm such as decision trees, random forests, Support Vector Machine (SVM) or the like.

### <Processing of Generating Estimate Data and Securing Spare Part for Component>

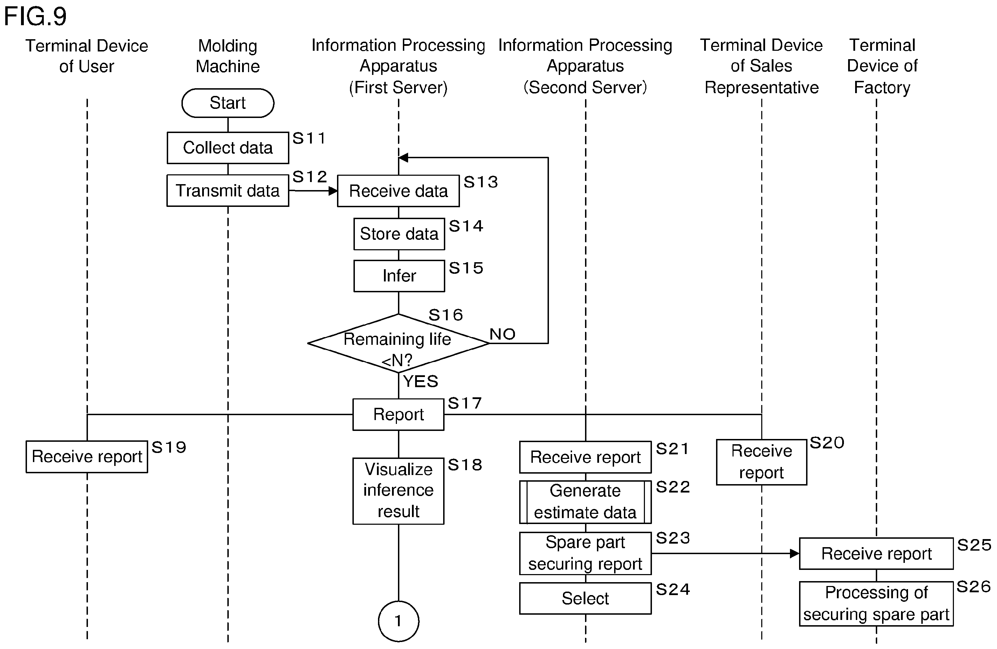

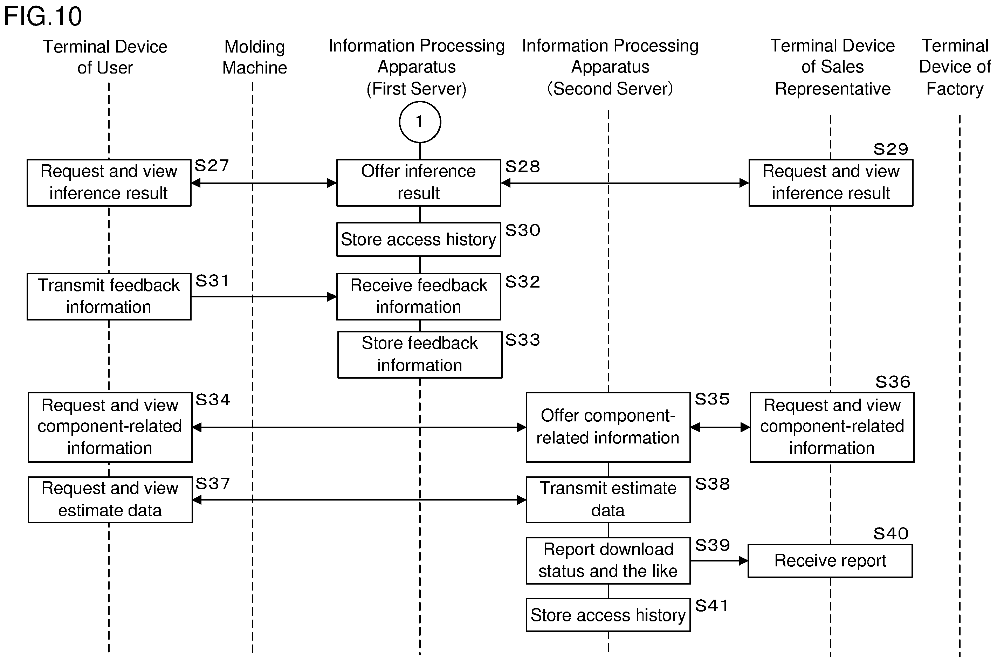

FIGs. 9 and 10 are a flowchart depicting a processing procedure by the information processing apparatus 5. The data collection device 3 of the molding machine 1 collects physical quantity data related to the conditions of multiple components constituting the molding machine 1 (step S11) and transmits the collected physical quantity data to the information processing apparatus 5 functioning as a first server (step S12). Note that multiple molding machines 1 and data collection devices 3 are provided, and the multiple data collection devices 3 transmit physical quantity data collected from the multiple molding machines 1 to the information processing apparatus 5.

The processing unit 51 of the first server receives the physical quantity data transmitted from the data collection device 3 (step S13). The processing unit 51 stores the received physical quantity data in the collection data DB 52a (step S14). Note that the processing unit 51, which executes the processing at step S13, functions as an acquisition unit that acquires physical quantity data.

The processing unit 51 then infers a remaining life or an abnormality degree of a component constituting the molding machine 1 based on the physical quantity data accumulated in the collection data DB 52a (step S15). Specifically, the processing unit 51 performs frequency analysis on the physical quantity data to convert the data into image data and inputs the image data representing the physical quantity data to the predictive learning model 54 to output the remaining life data or the abnormality degree data of the component. Note that the processing unit 51 calculates the remaining life or abnormality degree of each of the multiple components that constitute the multiple molding machines 1. In the case where physical quantity data related to the condition of the multiple components constituting one molding machine 1 is acquired, the processing unit 51 calculates the remaining life or the abnormality degree for each of the multiple components.

Next, the processing unit 51 determines whether or not the remaining life is shorter than a predetermined time N (step S16). The predetermined time N is desirably longer than the time required for at least manufacturing the component and securing a spare part. The predetermined time N varies depending on the type of the component.

It is noted that the processing unit 51 may be configured to determine whether or not the abnormality degree is less than a predetermined value corresponding to the above-mentioned predetermined time N.

If determining that the remaining life is equal to or longer than the predetermined time N (step S16: NO), the processing unit 51 returns the processing to step S13. If determining that the remaining life is shorter than the predetermined time N (step S16: YES), the processing unit 51 transmits report data indicating that the remaining life of a certain component is shorter than the predetermined time N, to the terminal device 6a of the user of the molding machine 1 provided with the component as well as the terminal device 6b of the sales representative (step S17).

Next, the processing unit 51 visualizes an inference result display part 9 on the machine condition offering site (step S18). In other words, when the user and the sales representative access the machine condition offering site through the terminal devices 6a, 6b, respectively, the processing unit 51 makes the inference result display part 9 for the remaining life of a component displayed.

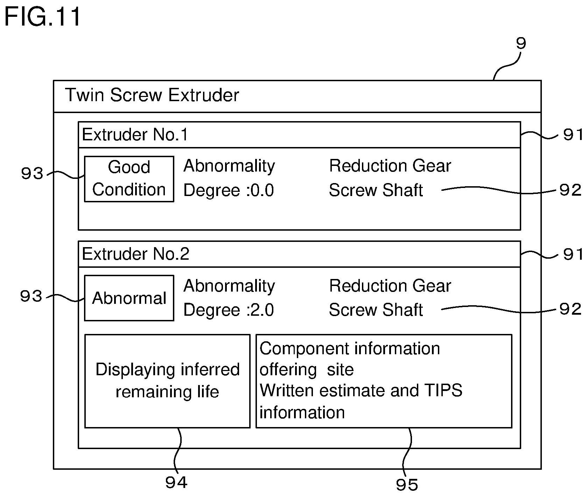

FIG. 11 is one example of the inference result display part 9. The inference result display part 9 contains a condition display section 91 for displaying conditions of components constituting each molding machine 1 of one or more molding machines 1 that are used by the user. The condition display section 91 contains, for example, a component name display section 92 for displaying the name of a component constituting the molding machine 1 and an icon 93 for indicating whether or not the component is abnormal. "Abnormal" corresponds to, for example, the remaining life being shorter than the predetermined time N. Moreover, the condition display section 91 displays the abnormality degree of the component by a numeral.

If an abnormality occurs in a component constituting the molding machine 1, the condition display section 91 displays a remaining life display icon 94 for displaying an inferred remaining life of the component. In the case where the remaining life display icon 94 is operated by the user, the information processing apparatus 5 displays a graph indicating the time variation of the physical quantity related to the condition of the component and the inferred remaining life of the component.

If an abnormality occurs in a component constituting the molding machine 1, the condition display section 91 displays a site link icon 95 for shifting to a component information offering site that offers a written estimate of the component and the component-related information (TIPS information). In the case where the site link icon 95 is operated by the user, the information processing apparatus 5 transmits the link for the component information offering site to the terminal device 6a. The terminal device 6a accesses the component information offering site using the transmitted information on the link. The processing unit 51 of the second server, which provides the component information offering site, transmits the estimate data indicating the replacement cost for a component determined to be abnormal and the component-related information to the terminal device 6a of the user, in response to the request from the user.

The terminal device 6a of the user receives the report data transmitted from the information processing apparatus 5 at step S17 (step S19). The terminal device 6a having received the report data displays the remaining life of the specific component being shorter than the predetermined time. This enables the user to take an action necessary for replacement of the reported component. For example, the user accesses the site provided by the information processing apparatus 5 to view the information related to the component and take an action such as a request for estimate data to estimate a cost necessary for replacement of the components.

The terminal device 6b of the sales representative receives the report data transmitted from the information processing apparatus 5 at step S17 (step S20). The terminal device 6b having received the report data displays the remaining life of the specific component being shorter than the predetermined time. The terminal device 6b having received the report data displays the remaining life of the specific component being shorter than the predetermined time. The sales representative can take an action necessary for maintenance of the reported component. For example, the sales representative can access the site provided by the information processing apparatus 5 to view information related to the component and take an action such as explaining or the like to the user about the replacement of the component.

The processing unit 51 of the second server receives the report data transmitted from the first server at step S17 (step S21). The processing unit 51 of the second server having received the report data generates estimate data of the component according to the received report data (step S22). The processing of generating estimate data will be described in detail below. The processing unit 51 further transmits spare part securing report data to request securing of a spear part for the component whose remaining life is shorter than the predetermined time to the terminal device 6c of the factory (step S23). The processing of transmitting the spare part securing report data to the terminal device 6c of the factory is one of the processing related to securing a spare part for a component that needs to be replaced.

Moreover, the processing unit 51 selects component-related information according to the current condition of the molding machine 1 and the component (step S24). In other words, the processing unit 51 specifies the component-related information expected to be desired by the user. The selected or specified component-related information is offered to the user in response to the request from the user.

The terminal device 6c of the factory receives the spare part securing report data (step S25). The terminal device 6c having received the spare part securing report data executes processing related to securing of a spare part (step S26). If there are components in stock, the terminal device 6c secures the component in stock as a spare part to be replaced with the reported component of the molding machine 1. If a component stock database is present, the terminal device 6c makes the component in stock as a spare by changing the records in the stock database. If there are no components in stock, processing of requesting for manufacture of the components is executed.

Though the case where the processing related to securing spare parts is executed if the remaining life of a component is shorter than the predetermined time N was described, the timing when the spare part securing report data is transmitted is one example. For example, the processing unit 51 may be configured to transmit the spare part securing report data to the terminal device 6c of the factory by being triggered by a request for estimate data at step S37 to be described below. The processing unit 51 may also be configured to transmit the spare part securing report data to the terminal device 6c of the factory by being triggered by a request for component-related information on a component to be replaced at step S34, which will be described below.

The terminal device 6a of the user requests the first server to provide an inference result related to the remaining life of the component in response to an operation by the user (step S27). The processing unit 51 of the first server transmits an inference result concerning the remaining life of the component to the terminal device 6a in response to the request from the terminal device 6a (step S28). The terminal device 6a receives the inference result transmitted from the first server and displays the received inference result. The user can view the inference result concerning the remaining life or the abnormality degree of the component.

Likewise, the terminal device 6b of the sales representative requests the first server to provide an inference result related to the remaining life of the component in response to an operation by the sales representative (step S29). The processing unit 51 of the first server transmits an inference result concerning the remaining life of the component to the terminal device 6b in response to the request from the terminal device 6b (step S28). The terminal device 6b receives the inference result transmitted from the first server and displays the received inference result. The sales representative can view the inference result concerning the remaining life or the abnormality degree of the component.

The processing unit 51 of the first server stores in the user DB 52b the access history to the machine condition offering site from the terminal device 6a of the user (step S30).

The terminal device 6a of the user transmits to the first server feedback information for the inference result concerning the remaining life of the component in response to an operation by the user (step S31). The feedback information is information on an evaluation for the accuracy of the inference result, an actual remaining life, a difference between the actual remaining life and the inference result and the like. The processing unit 51 of the first server receives the feedback information transmitted from the terminal device 6a (step S32). The processing unit 51 of the first server stores the feedback information transmitted from the terminal device 6a of the user in the user DB 52b (step S33).

The terminal device 6a of the user requests the second server to provide component-related information in response to an operation by the user (step S34). The processing unit 51 of the second server transmits component-related information to the terminal device 6a in response to the request from the terminal device 6a (step S35). The terminal device 6a receives the component-related information transmitted from the second server and displays the received component-related information. The user can view the component-related information.

Likewise, the terminal device 6b of the sales representative requests the second server to provide component-related information in response to an operation by the sales representative (step S36). The processing unit 51 of the second server transmits component-related information to the terminal device 6b in response to the request from the terminal device 6b (step S35). The terminal device 6b receives the component-related information transmitted from the second server and displays the received inference result. The sales representative can view the component-related information.

The terminal device 6a of the user requests the second server to provide estimate data indicating the cost for replacement of components in response to an operation by the user (step S37). The processing unit 51 of the second server transmits the estimate data generated at step S22 to the terminal device 6a in response to the request from the terminal device 6a (step S38). The terminal device 6a receives the estimate data transmitted from the second server and displays the received estimate data.

The processing unit 51 of the second server transmits report data indicating that a request for the written estimate data from the user is present to the terminal device 6b of the sales representative for the user (step S39). The terminal device 6b of the sales representative receives the report data transmitted from the second server (step S40). The terminal device 6a reports to the sales representative that a request for the written estimate data is present from the user based on the report data.

The processing unit 51 of the second server stores in the user DB 52b the access history to the component information offering site by the user (step S41). In particular, the processing unit 51 of the second server stores the access histories related to requests for the component-related information and the written estimate data.

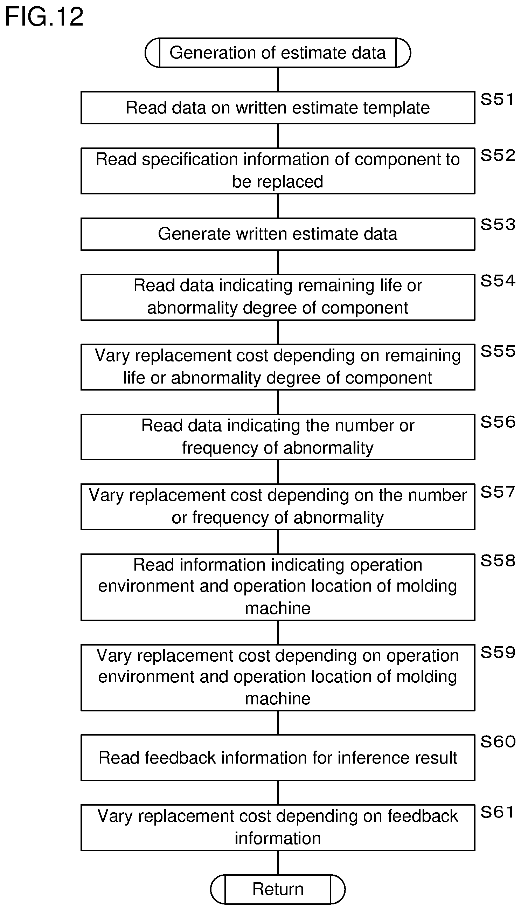

FIG. 12 is a flowchart depicting a processing procedure for generating estimate data. The processing unit 51 of the information processing apparatus 5 as a second server reads data on the written estimate template 52e from the storage unit 52 (step S51). The processing unit 51 reads specification information of a component to be estimated from the user machine DB 52c (step S52). The processing unit 51 then generates written estimate data indicating a replacement cost for the component based on the data on the written estimate template 52e and the specification information (step S53). For example, the processing unit 51 inputs a user name as a source of request for the estimate data, a component name of the component to be estimated, a product number and the like to the written estimate temple 52e. The processing unit 51 further calculates a replacement cost for the component based on the specification information and inputs the calculated replacement cost for the component to the written estimate template 52e. The storage unit 52 stores a function or a table depicting a relationship between the specification information of a component and a replacement cost. The processing unit 51 may calculate a replacement cost using the function or table stored in the storage unit 52.

Note that, in place of the processing at steps S51 to S53, the processing unit 51 may also be configured to refer to the estimate data issued in the past and read the estimate data on the replacement cost for the same component as that is currently to be replaced, if present, from the user DB 52b. The processing unit 51, however, deletes items concerning increases or decreases of the replacement cost and employs the estimate data indicating a standard replacement cost.

Next, the processing unit 51 reads data indicating a remaining life or an abnormality degree of the component from the user machine DB 52c (step S54) and varies the replacement cost for the component depending on the read remaining life (step S55).

For example, the processing unit 51 increases the replacement cost in the case where the remaining life is shorter than a predetermined lifetime, or in the case where the abnormality degree is greater than a predetermined abnormality degree. In addition, the processing unit 51 may be configured to increase the replacement cost as the remaining life decreases, or as the degree of abnormality increases.

The shorter remaining life necessitates manufacturing a component in a shorter delivery time than usual, which enables adding an extra charge. The predetermined lifetime or the predetermined abnormality degree may be set to values that allow a component to be manufactured at a predetermined normal delivery time.

The processing unit 51 then reads the data indicating th number or frequency of abnormality occurrences from the user DB 52b (step S56) and varies the replacement cost for the component depending on the read number or frequency of abnormality occurrences (step S57).

For example, the processing unit 51 increases the replacement cost as the number or frequency of abnormality occurrences is larger than a predetermined number of occurrences or predetermined frequency. In addition, the processing unit 51 may be configured to increase the replacement cost as the number or frequency of abnormality occurrences increases.

In the case where the number or frequency of abnormality occurrences increases, the risk of securing spare parts rises, adding an extra charge.

Next, the processing unit 51 reads the data indicating the operation environment and operation location of the molding machine 1 from the user DB 52b (step S58), and varies the replacement cost for the component depending on the read operation environment and operation location (step S59).

The processing unit 51 increases the replacement cost in the case where the molding machine 1 is under an environment that affects the life of the component of the molding machine 1, such as "along the coast," which raises the risk of failure.

Next, the processing unit 51 reads the feedback information for the inference result concerning the remaining life of the component from the user DB 52b (step S60), varies the replacement cost for the component depending on the read feedback information (step S61), and ends the processing.

The processing unit 51 reduces the replacement cost as the feedback information increases. Because the feedback information contributes to the improvement of the accuracy of the predictive learning model 54 and is in the interest of the maintenance management company, it is worth reducing the replacement cost.

### <User Clustering Processing and Product Information Offering Processing>

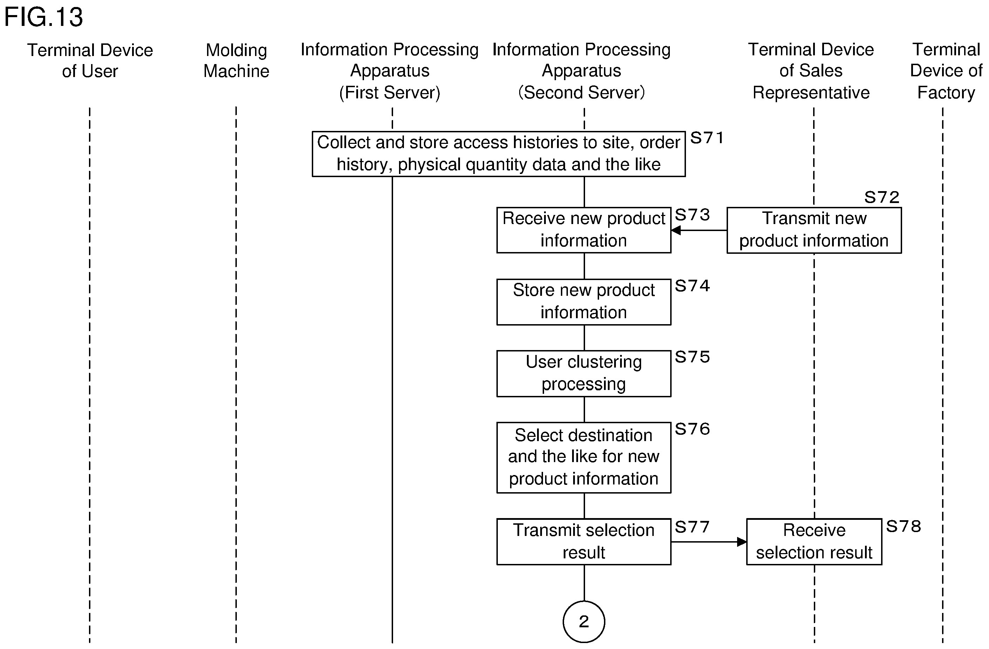

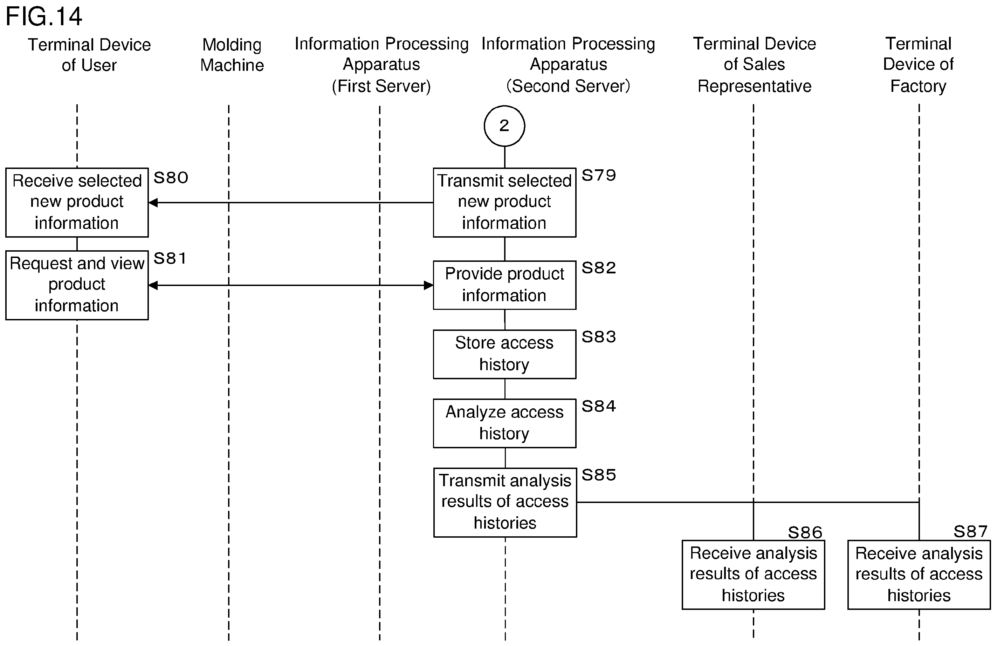

FIG. 13 and FIG. 14 depict a flowchart depicting a processing procedure for clustering users. As described above, the information processing apparatus 5 collects access histories to the machine condition offering site and the component information offering site, an order history, physical quantity data related to the condition of a component and the like, and stores the collected access history information, physical quantity data and the like in the collection data DB 52a, the user DB 52b and the user machine DB 52c (step S71).

The terminal device 6b of the sales representative transmits, to the second server, new product information for the molding machine 1 and the component in response to an operation by the sales representative (step S72). The processing unit 51 of the second server receives the new product information transmitted from the terminal device 6b (step S73) and stores the received new product information in the storage unit 52 (step S74).

Next, the processing unit 51 executes user clustering processing based on the information stored in the collection data DB 52a, the user DB 52b or the user machine DB 52c (step S75).

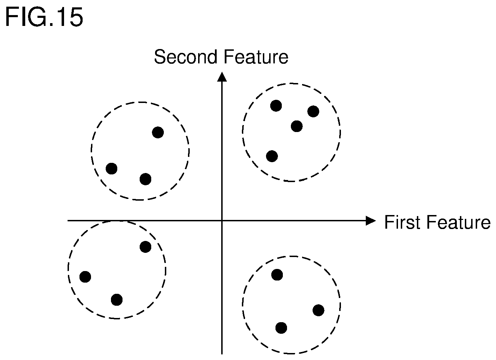

FIG. 15 is a conceptual diagram depicting user clustering processing. The horizontal and vertical axes respectively indicate a first feature and a second feature obtained based on the information stored in the collection data DB 52a, user DB 52b or user machine DB 52c. For example, the first feature indicates the number of accesses to the machine condition offering site while the second feature indicates the number of accesses to the component information offering site. The black dots in FIG. 15 indicate the first feature and the second feature for each of multiple users. A circle drawn with a dashed line indicates a class of users with a specific feature. Users belonging to the same class are similar in their molding machine 1, molding condition, operating state, operation environment, access trend to the machine condition offering site and component information offering site, component replacement history and component purchase history. It is thus presumed that users belonging to the same class have a tendency to purchase similar products.

Though FIG. 15 depicts the features of the users in two dimensions, the number of dimensions of the features, that is, the number of features representing the user may be equal to or more than three. The following quantities can be used for the features for the dimensions. Features include, for example, the number or frequency of accesses to the machine condition offering site, the number of accesses to the machine condition offering site, the number of orders for components, the number of times or frequency components are determined as abnormal, the remaining life or abnormality degree of components, physical quantity data, the size of users (number of employees or the like), a domestic factory or a overseas factory, the number of molding machines 1 owned, the ratio of the in-house molding machines by its own company and the molding machines made by other companies.

The processing unit 51 of the second server selects a destination, a method and the like for proposing new product information based on the clustering processing (step S76). The processing unit 51 of the second server transmits a selection result concerning the destination and the like for proposing the new product information to the terminal device 6b of the sales representative for the user (step S77).

**In** the case where the first feature indicates the number of accesses to the machine condition offering site and the second feature indicates the number of accesses to the component information offering site, the sales representative can perform sales activities and make proposals taking the target customer stratum into account as follows.

**In** the case where the number of accesses to the machine condition offering site is high and the number of accesses to the component information offering site is low, it is assumed that the user is interested in maintenance but tends to issue few orders. It is thus preferable to actively conduct a wide range of sales promotion activities for components.

**In** the case where the number of accesses to the machine condition offering site and the number of accesses to the component information offering site are both high, it is assumed that the user is interested in new things. It is thus preferable to conduct sales promotion activities for new products.

**In** the case where the number of accesses to the machine condition offering site is low and the number of accesses to the component information offering site is high, it is assumed that the user keeps placing orders but is conservative about new products. It is thus preferable to promote existing products.

The processing unit 51 of the second server determines, if a certain user purchases a component (product), another user belonging to the same class as the certain user also has a probability of purchasing the same type of component. The processing unit 51 thus transmits the selection results regarding the user belonging to the class as a proposed destination and the component as a proposed product, to the terminal device 6b of the sales representative.

The processing unit 51 may also be configured to specify an existing product similar to the new product and specify the class having a high tendency to purchase the existing product. Similarities between products can also be determined by cluster analysis based on the information stored in the collection data DB 52a, the user DB 52b or the user machine DB 52c. The processing unit 51 transmits, to the terminal device 6b of the sales representative, a selection result including users belonging to the class where users tend to purchase the existing product similar to the new product as a proposed destination and the new product as a proposed product.

The terminal device 6b of the sales representative receives the selection result transmitted from the second server (step S78). The terminal device 6a reports the proposed destination or the like of the new product to the sales representative based on the received selection result.

The processing unit 51 of the second server transmits the selected new product information to the terminal device 6a of the user (step S79). The terminal device 6a of the user receives the new product information transmitted from the second server (step S80). The terminal device 6a reports the received new product information to the user.

The terminal device 6a of the user requests the second server to provide various types of product information in response to an operation by the user (step S81). The processing unit 51 of the second server transmits various types of product information selected by the user clustering processing to the terminal device 6a in response to the request from the terminal device 6a (step S82). The terminal device 6a receives the various types of product information transmitted from the second server and displays the received component-related information. The user can view the product information selected by the clustering processing.

The processing unit 51 of the second server stores the access history to the machine condition offering site from the terminal device 6a of the user in the user DB 52b (step S83). The processing unit 51 of the second server analyzes the access history to the machine condition offering site and the component information offering site by the user (step S84) and transmits the analysis results of the access histories to the terminal device 6b of the sales representative and the terminal device 6c of the factory (step S85).

The terminal device 6b of the sales representative receives the analysis results of the access histories (step S86). The sales representative can conduct sales activities in view of the analysis results of the access histories by the user.

Meanwhile, the terminal device 6c of the factory receives the analysis results of the access histories (step S87). The factory can adjust the manufacturing plan of products based on the analysis results of the access histories.

As described above, according to the information processing method and the like of the present embodiment, before a component constituting the molding machine 1 is made inoperable because of being damaged, a remaining life or an abnormality degree of the component can be inferred, and written estimate data indicating a replacement cost for the component can be generated in advance.

According to the information processing method and the like of the present embodiment, before a component constituting the molding machine 1 is made inoperable because of being damaged, a remaining life or an abnormality degree of the component can be inferred, and processing for securing spare parts for the component that needs to be replaced can be executed.

According to the information processing method and the like of the present embodiment, before a component constituting the molding machine 1 is made inoperable because of being damaged, a remaining life or an abnormality degree of the component can be inferred, and component-related information according to the condition of a component can be selected and offered.

Depending on the remaining life or the abnormality degree of a component, estimate data adjusted in the replacement cost for the component can be generated.

Depending on the number or frequency of abnormality occurrences for a component, estimate data adjusted in the replacement cost for the component can be generated.

Depending on the operation environment or operation location of the molding machine 1, estimate data adjusted in the replacement cost for a component can be generated.

Depending on the user feedback information for the inference result concerning the remaining life of a component, estimate data adjusted in the replacement cost for the component can be generated.

As to a component having a remaining life shorter than the predetermined time, processing of securing a spare part can be executed before the estimate data is offered to the user. Before the component actually fails, manufacturing a component can be started, which prevents operational shutdown for the molding machine 1.

More specifically, based on the remaining life or the abnormality degree of a component, it is possible to determine whether to secure a spare part for the component, generate estimate data if in a state required for securing a spare part, execute the processing for securing a spare part and offer to the user an inference result concerning the remaining life and the like as well as the estimate data of the replacement cost.

Using the specification information of a component constituting the molding machine 1 by the user, estimate data of a replacement cost for the component can properly be generated. Furthermore, specification information is transmitted to the terminal device 6b of the sales representative and the terminal device 6c of the factory, which can immediately start manufacturing a component of a custom-made product that constitutes the molding machine 1 of the user.

Based on the physical quantity data related to the condition of a component constituting the molding machine 1 and an inference result related to the remaining life or the abnormality degree of the component, the relevant component-related information can be selected and offered to the user.

Clustering users enables selection of where and how new product information is to be proposed, and such selection results can be offered to the sales representative, which allows the sales representative to conduct more precise sales promotion activities.

The means for solving the present disclosure is further described.

### Clause 1

An information processing method, comprising:
acquiring physical quantity data related to a condition of a component constituting a molding machine;
inferring a remaining life or an abnormality degree of the component based on the acquired physical quantity data;
generating estimate data indicating a replacement cost for the component that needs to be replaced based on an inference result concerning a remaining life or an abnormality degree of the component; and
offering the generated estimate data to a user of the molding machine.

### Clause 2

The information processing method according to clause 1 comprising
varying a replacement cost for the component depending on a length of a remaining life of the component and a magnitude of an abnormality degree of the component.

### Clause 3

The information processing method according to clause 1 or 2 comprising varying a replacement cost for the component depending on the number and frequency of abnormality occurrences for the component.

### Clause 4

The information processing method according to any one of clauses 1 to 3, comprising:
acquiring data indicating an operation environment or an operation location of the molding machine; and
varying a replacement cost for the component depending on an operation environment or an operation location indicated by the acquired data

### Clause 5

The information processing method according to any one of clauses 1 to 4, comprising:
offering the inference result to the user;
acquiring feedback information from the user for the inference result; and
varying a replacement cost for the component depending on the acquired feedback information.

### Clause 6

The information processing method according to any one of clauses 1 to 5 comprising executing processing related to securing a spare part for the component that needs to be replaced before offering the estimate data to the user.

### Clause 7

The information processing method according to any one of clauses 1 to 6, comprising:
reading specification information of the component that needs to be replaced from a database storing a plurality of users and specification information of components constituting a plurality of the molding machines being different that are used by the plurality of users, in association with each other; and
generating the estimate data based on the read specification information.

### Clause 8

The information processing method according to any one of clauses 1 to 7, comprising:
reading specification information of the component that needs to be replaced from a database storing a plurality of users and specification information of components constituting a plurality of the molding machines being different that are used by the plurality of users, in association with each other; and
executing processing related to securing a spare part for the component that needs to be replaced based on the read specification information.

### Clause 9

The information processing method according to any one of clauses 1 to 8, comprising:
determining whether or not securing a spare part for the component is required based on a remaining life or an abnormality degree of the component;
generating the estimate data in a case where securing a spare part for the component is required;
executing processing related to securing a spare part for the component that needs to be replaced in a case where securing a spare part for the component is required;
offering the inference result to the user; and
offering the estimate data in a case where a request for the estimate data from the user is present.

### Clause 10

The information processing method according to any one of clauses 1 to 9, comprising:
selecting relevant information according to a condition of the component from a storage unit storing a plurality of relevant information in correspondence with conditions of the component based on the acquired physical quantity data and an inference result concerning a remaining life or an abnormality degree of the component; and
offering the selected relevant information to the user of the molding machine.

### Clause 11

The information processing method according to any one of clauses 1 to 10, comprising:
accumulating data indicating an access history to a site offering the inference result, an access history to a site offering the estimate data, a purchase history of the component, a condition inference history, user-related information, a molding machine operation environment or a molding machine operation location; and
clustering users based on the accumulated data.

### Clause 12

An information processing apparatus, comprising:
an acquisition unit that acquires physical quantity data related to a condition of a component constituting a molding machine; and a processing unit,
the processing unit
inferring a remaining life or an abnormality degree of the component based on the acquired physical quantity data,
generating estimate data indicating a replacement cost for the component that needs to be replaced based on an inference result concerning a remaining life or an abnormality degree of the component, and
offering the generated estimate data to a user of the molding machine.

### Clause 13

A computer program causing a computer to execute processing of:
acquiring physical quantity data related to a condition of a component constituting a molding machine;
inferring a remaining life or an abnormality degree of the component based on the acquired physical quantity data;
generating estimate data indicating a replacement cost for the component that needs to be replaced based on an inference result concerning a remaining life or an abnormality degree of the component; and
offering the generated estimate data to a user of the molding machine.

- 1: molding machine
- 2: sensor
- 3: data collection device
- 4: router
- 5: information processing apparatus
- 6a: terminal device of user
- 6b: terminal device of sales representative
- 6c: terminal device of factory
- 10: cylinder
- 10a: hopper
- 11: screw
- 12: die
- 13: motor
- 14: reduction gear
- 15: control device
- 31: control unit
- 32: storage unit
- 33: communication unit
- 34: data input unit
- 50: recording medium
- 51: processing unit
- 52: storage unit
- 53: communication unit
- 54: predictive learning model
- 54a: input layer
- 54b: intermediate layer
- 54c: output layer
- 55: frequency analysis unit
- 56: image generation unit
- 52a: collection data DB
- 52b: user DB
- 52c: user machine DB
- 52d: component-related information DB
- 52e: written estimate template
- P: computer program

## Claims

1. An information processing method, comprising:
acquiring physical quantity data related to a condition of a component constituting a molding machine;
inferring a remaining life or an abnormality degree of the component based on the acquired physical quantity data;
generating estimate data indicating a replacement cost for the component that needs to be replaced based on an inference result concerning a remaining life or an abnormality degree of the component; and
offering the generated estimate data to a user of the molding machine.

2. The information processing method according to claim 1 comprising
varying a replacement cost for the component depending on a length of a remaining life of the component and a magnitude of an abnormality degree of the component.

3. The information processing method according to claim 1 or 2 comprising
varying a replacement cost for the component depending on the number and frequency of abnormality occurrences for the component.

4. The information processing method according to any one of claims 1 to 3, comprising:
acquiring data indicating an operation environment or an operation location of the molding machine; and
varying a replacement cost for the component depending on an operation environment or an operation location indicated by the acquired data.

5. The information processing method according to any one of claims 1 to 4, comprising:
offering the inference result to the user;
acquiring feedback information from the user for the inference result; and
varying a replacement cost for the component depending on the acquired feedback information.

6. The information processing method according to any one of claims 1 to 5 comprising executing processing related to securing a spare part for the component that needs to be replaced before offering the estimate data to the user.

7. The information processing method according to any one of claims 1 to 6, comprising:
reading specification information of the component that needs to be replaced from a database storing a plurality of users and specification information of components constituting a plurality of the molding machines being different that are used by the plurality of users, in association with each other; and
generating the estimate data based on the read specification information.

8. The information processing method according to any one of claims 1 to 7, comprising:
reading specification information of the component that needs to be replaced from a database storing a plurality of users and specification information of components constituting a plurality of the molding machines being different that are used by the plurality of users, in association with each other; and
executing processing related to securing a spare part for the component that needs to be replaced based on the read specification information.

9. The information processing method according to any one of claims 1 to 8, comprising:
determining whether or not securing a spare part for the component is required based on a remaining life or an abnormality degree of the component;
generating the estimate data in a case where securing a spare part for the component is required;
executing processing related to securing a spare part for the component that needs to be replaced in a case where securing a spare part for the component is required;
offering the inference result to the user; and
offering the estimate data in a case where a request for the estimate data from the user is present.

10. The information processing method according to any one of claims 1 to 9, comprising:
selecting relevant information according to a condition of the component from a storage unit storing a plurality of relevant information in correspondence with conditions of the component based on the acquired physical quantity data and an inference result concerning a remaining life or an abnormality degree of the component; and
offering the selected relevant information to the user of the molding machine.

11. The information processing method according to any one of claims 1 to 10, comprising:
accumulating data indicating an access history to a site offering the inference result, an access history to a site offering the estimate data, a purchase history of the component, a condition inference history, user-related information, a molding machine operation environment or a molding machine operation location; and
clustering users based on the accumulated data.

12. An information processing method, comprising:
acquiring physical quantity data related to a condition of a component constituting a molding machine;
inferring a remaining life or an abnormality degree of the component based on the acquired physical quantity data;
reading specification information of the component that needs to be replaced based on an inference result concerning a remaining life or an abnormality degree of the component from a database storing a plurality of users and specification information of components constituting a plurality of the molding machines being different that are used by the plurality of users, in association with each other; and
executing processing related to securing a spare part for the component that needs to be replaced based on the read specification information.

13. An information processing method, comprising:
acquiring physical quantity data related to a condition of a component constituting a molding machine;
inferring a remaining life or an abnormality degree of the component based on the acquired physical quantity data;
selecting relevant information according to a condition of the component from a storage unit storing a plurality of relevant information in correspondence with conditions of the component based on the acquired physical quantity data and inference result concerning a remaining life or an abnormality degree of the component; and
offering the selected relevant information to the user of the molding machine.

14. An information processing apparatus, comprising:
an acquisition unit that acquires physical quantity data related to a condition of a component constituting a molding machine; and a processing unit,
the processing unit
inferring a remaining life or an abnormality degree of the component based on the acquired physical quantity data,
generating estimate data indicating a replacement cost for the component that needs to be replaced based on an inference result concerning a remaining life or an abnormality degree of the component, and
offering the generated estimate data to a user of the molding machine.

15. An information processing apparatus, comprising:
an acquisition unit that acquires physical quantity data related to a condition of a component constituting a molding machine; and a processing unit,
the processing unit
inferring a remaining life or an abnormality degree of the component based on the acquired physical quantity data,
reading specification information of the component that needs to be replaced based on an inference result concerning a remaining life or an abnormality degree of the component from a database storing a plurality of users and specification information of components constituting a plurality of the molding machines being different that are used by the plurality of users, in association with each other; and
executing processing related to securing a spare part for the component that needs to be replaced based on the read specification information.

16. An information processing apparatus, comprising:
an acquisition unit that acquires physical quantity data related to a condition of a component constituting a molding machine; and a processing unit,
the processing unit
inferring a remaining life or an abnormality degree of the component based on the acquired physical quantity data;
selecting relevant information according to a condition of the component from a storage unit storing a plurality of relevant information in correspondence with conditions of the component based on the acquired physical quantity data and inference result concerning a remaining life or an abnormality degree of the component; and
offering the selected relevant information to the user of the molding machine.

17. A computer program causing a computer to execute processing of:
acquiring physical quantity data related to a condition of a component constituting a molding machine;
inferring a remaining life or an abnormality degree of the component based on the acquired physical quantity data;
generating estimate data indicating a replacement cost for the component that needs to be replaced based on an inference result concerning a remaining life or an abnormality degree of the component; and
offering the generated estimate data to a user of the molding machine.

18. A computer program causing a computer to execute the processing of:
acquiring physical quantity data related to a condition of a component constituting a molding machine;
inferring a remaining life or an abnormality degree of the component based on the acquired physical quantity data;
reading specification information of the component that needs to be replaced based on an inference result concerning a remaining life or an abnormality degree of the component from a database storing a plurality of users and specification information of components constituting a plurality of the molding machines being different that are used by the plurality of users, in association with each other; and
executing processing related to securing a spare part for the component that needs to be replaced based on the read specification information.

19. A computer program causing a computer to execute processing of:
acquiring physical quantity data related to a condition of a component constituting a molding machine;
inferring a remaining life or an abnormality degree of the component based on the acquired physical quantity data;
selecting relevant information according to a condition of the component from a storage unit storing a plurality of relevant information in correspondence with conditions of the component based on the acquired physical quantity data and inference result concerning a remaining life or an abnormality degree of the component; and
offering the selected relevant information to the user of the molding machine.
